# EUROPÄISCHE PATENTSCHRIFT

(11) **EP 3 985 189 B1**
(45) Veröffentlichungstag und Bekanntmachung des Hinweises auf die Patenterteilung: **06.12.2023**
(21) Anmeldenummer: 20201716.6
(22) Anmeldetag: 14.10.2020
(51) Int. Cl.: E04B 1/26, F16B 5/00, F16B 15/00

(54) **VERBINDER FÜR ZWEI WERKSTÜCKE**
CONNECTOR FOR TWO WORKPIECES
CONNECTEUR POUR DEUX PIÈCES

(43) Veröffentlichungstag der Anmeldung: 20.04.2022
(73) Patentinhaber: Knapp GmbH, 3324 Euratsfeld (AT)
(72) Erfinder: KNAPP, Friedrich, 4362 Bad Kreuzen (AT)
(74) Vertreter: Weiser & Voith Patentanwälte Partnerschaft

(56) Entgegenhaltungen:
- DE-A1-102009 060 405
- DE-U1- 20 321 453
- DE-U1-202008 008 130
- JP-A- H02 300 442
- US-A- 924 912

## Beschreibung

Die vorliegende Erfindung betrifft einen Verbinder für zwei Werkstücke, mit zwei Beschlägen, die jeweils eine Montageseite für ein Werkstück und eine gegenüberliegende Verbindungsseite haben, an welcher sie in einer parallel zur Verbindungsseite verlaufenden Einhängerichtung ineinander einhängbar sind.

Verbinder solcher Art sind z.B. aus der EP 1 856 417 B1 oder der EP 3 456 892 A1 bekannt und werden unter der Marke RICON^{®} von der Firma Knapp GmbH, Euratsfeld, Österreich, vertrieben. Sie eignen sich besonders zum Aufbau von Schwerlastverbindungen im Ingenieurholzbau, beispielsweise zum Verbinden von Haupt-, Neben- oder Querträgern, Querzügen, Bindern, Stützen, Pfosten, Wänden od.dgl. Die Beschläge sind meist aus Metall, z.B. hochfestem Aluminium, und die zu verbindenden Werkstücke aus Holz, beispielsweise Brettschichtholz (BSH), Leimbindern usw. Zumindest eines der Werkstücke kann alternativ beispielsweise aus Beton, Stein, Mauerwerk oder sogar Metall sein.

Bei bekannten Verbindern dieser Art, siehe z.B. auch DE 20 2008 008 130 U1, erfolgt die Verbindung der beiden Beschläge durch zwei gegengleiche Schwalbenschwanzverbindungen, die jeweils aus einer vorspringenden Nase mit Hinterschneidung am einen Beschlag und einer Art Schwalbenschwanznut am anderen Beschlag gebildet sind. Bei sehr hohen Lasten können die Schwalbenschanznuten sich verformen bzw. ausreißen, mit der Gefahr eines Lockerns und äußerstenfalls Versagens der Verbindung.

Ein Verbinder gemäß dem Oberbegriff des Anspruchs 1 ist aus der JP H02 300442 A bekannt.

Die Erfindung setzt sich um Ziel, Verbinder der genannten Art in Bezug auf ihre Tragfähigkeit, Haltbarkeit und Baugröße weiter zu verbessern, sodass sie bei gleichem Gewicht oder gleicher Baugröße dauerhaft größere Kräfte aufnehmen können.

Dieses Ziel wird mit einem Verbinder der einleitenden Art erreicht, der sich gemäß der Erfindung durch die kennzeichnenden Merkmale des Anspruchs 1 auszeichnet.

Anstatt über schmale Schwalbenschwanzverbindungen wird bei dem erfindungsgemäßen Verbinder die in Einhängerichtung auftretende Hauptlast nun gleichmäßig über die gesamte Breite des Verbinders von den Stegen und Lippen und damit zusammenwirkenden Hinterschneidungen bzw. Stufen aufgenommen. Dies ermöglicht nicht nur die Aufnahme besonders hoher Lasten, sondern erhöht auch signifikant die Torsionssteifigkeit des Verbinders um eine Achse normal zu den Verbindungsseiten. Dadurch kann der Verbinder bei unverändert sicherer Verankerung der beiden Beschläge aneinander bei gleicher Baugröße höhere Kräfte bzw. bei geringerer Baugröße dieselben Kräfte aufnehmen. Aufgrund der über die gesamte Breite verlaufenden Lippen und Stege brauchen diese in Einhängerichtung nur eine geringere Überlappung mit den Hinterschneidungen bzw. Stufen aufzuweisen, was kurze Einhängewege beim Schließen der Verbindung bedeutet und die Handhabung der Werkstücke bei ihrer Verbindung wesentlich erleichtert.

Um eine spielfreie Verbindung der Beschläge in Richtung normal auf die Verbindungsseiten zu erreichen, kann dabei die Dicke der Lippe an die lichte Weite der Hinterschneidung möglichst gut angepasst sein. Wenn anderseits aber gerade ein solches Spiel zwischen den Beschlägen gewünscht ist, kann die Dicke der Lippe insbesondere auch kleiner als die lichte Weite der Hinterschneidung gewählt werden.

Besonders vorteilhaft ist eine weitere bevorzugte Ausführungsform des Verbinders, in welcher die Dicke des Stegs kleiner ist als die lichte Weite der Hinterschneidung.

In der ersten Ausführungsform der Erfindung haben der Absatz und sein Steg im Verlauf über die Breite des Beschlags eine Ausbuchtung und die genannte Stirnseite und ihre Lippe im Verlauf über die Breite des Beschlags eine dazu komplementäre Einbuchtung. Dies vereinigt einige Vorteile der bekannten Schwalbenschwanzverbindungen wie gegenseitige Ausrichtung bzw. Zentrierung der Beschläge quer zur Einhängerichtung mit den Vorteilen der Erfindung einer über die gesamte Breite des Beschlages gehenden Auflagefläche.

In der zweiten Ausführungsform der Erfindung ist in der Hinterschneidung ein Ausrichtstift angeordnet, welcher beim Einhängen in eine Ausrichtkerbe der Lippe eingreift, um die Beschläge quer zur Einhängerichtung aufeinander auszurichten.

Eine dritte Ausführungsform der Erfindung besteht in einer Kombination der ersten und der zweiten Ausführungsform.

In einer (nicht mit der ersten Ausführungsform kombinierbaren) Variante der zweiten Ausführungsform können der Absatz und sein Steg sowie die Stirnseite und ihre Lippe über die Breite des Beschlags auch jeweils gerade sein. Dadurch können bei vertikaler Einhängerichtung zwischen den beiden Beschlägen große horizontale Auflageflächen geschaffen werden, die hohe Torsionssteifigkeit des Verbinders bieten.

Der Verbinder der Erfindung kann mit Mitteln zur temporären Sicherung bzw. Verrastung der zwischen den Beschlägen geschlossenen Verbindung ausgestattet werden. In einer ersten bevorzugten Ausführungsform solcher Sicherungs- bzw. Rastmittel ist der eine Beschlag mit einem Rasthaken ausgestattet, welcher federnd in eine Aussparung des anderen Beschlags einschnappen kann. Der Rasthaken kann insbesondere an seinem einen Ende in einer Nut der Montageseite verankert sein, mit seinem anderen Ende über die Lippe vorstehen und in die Aussparung des anderen Beschlags einschnappen, welche auf dessen Absatz ausgebildet ist. Der in die Aussparung des anderen Beschlags einschnappende Rasthaken bewirkt gleichzeitig eine Zentrierung bzw. Ausrichtung des einen Beschlags gegenüber dem anderen in Richtung quer zur Einhängerichtung in der Ebene der Verbindungsseiten.

In einer zweiten bevorzugten Ausführungsform der genannten Sicherungs- bzw. Rastmittel umfasst der Verbinder zusätzlich eine im wesentlichen U-förmige federnde Klammer mit Hakenenden, welche den einen Beschlag übergreift und mit ihren Hakenenden in seitliche Aussparungen des anderen Beschlags einschnappen kann. Diese Klammer kann auch noch nachträglich nach dem ineinander Einhängen der Beschläge angebracht werden und sichert so deren Verbindung sowohl gegen ein Lösen entgegen der Einhängerichtung als auch gegen ein Verschieben quer zur Einhängerichtung.

Besonders günstig ist es, wenn der Mittelabschnitt der Klammer zwischen den Hakenenden im wesentlichen bündig in einer U-förmigen Ausnehmung des einen Beschlags geführt ist, sodass die Klammer nicht vorsteht und damit gegen unbeabsichtigtes Betätigen bzw. Verschieben geschützt ist.

In einer besonders vorteilhaften Variante hat die U-förmige Ausnehmung eine zentrale Vertiefung, in welche der Mittelabschnitt der Klammer hineindrückbar ist, um ihre Hakenenden auseinanderzuspreizen. Dies ermöglicht ein einfaches Lösen der Klammer aus ihrer Verrastung in den Aussparungen, beispielsweise zur Demontage der Werkstücke für Reparatur oder Austausch.

Gemäß einem weiteren bevorzugten Merkmal der Erfindung ist jeder Beschlag sowohl von Bohrungen normal zur Montageseite als auch von Bohrungen schräg zur Montageseite durchsetzt. Dadurch ist der Verbinder auch zum Verbinden von Werkstücken unter einem Winkel bzw. mit Gehrung geeignet. In einem solchen Fall nehmen die Zug- und Scherbelastungen zwischen den Montageseiten der Beschläge und den Werkstücken je nach Einbausituation unterschiedliche Winkel ein, und durch Vorsehen sowohl gerader als auch schräger Montagebohrungen kann eine sichere Verankerung der Beschläge bei verschiedensten Zug- und Belastungswinkeln erreicht werden.

In einer weiteren bevorzugten Ausgestaltung der Erfindung kann der Steg des Absatzes zu einer winkelförmig von der Verbindungsseite des Beschlags auskragenden Tragplatte verlängert sein. Dadurch kann der am Werkstück befestigte Beschlag das andere Werkstück mittels der Tragplatte zusätzlich direkt abstützen. Optional kann die Tragplatte zumindest eine sie normal oder schräg durchsetzende Bohrung aufweisen, so dass sie zusätzlich direkt mit dem anderen Werkstück verschraubt werden kann.

Die Erfindung wird nachstehend anhand von in den beigeschlossenen Zeichnungen dargestellten Beispielen näher erläutert. In den Zeichnungen zeigen:
die Fig. 1 und 2 ein erstes Beispiel des Verbinders in einer ersten Einhängestellung mit schematisch dargestellten Werkstücken in einer Seitenansicht (Fig. 1) bzw. anhand eines der beiden (gleichen) Beschläge des Verbinders in einer Perspektivansicht (Fig. 2);
die Fig. 3 bis 5 ein zweites Beispiel des Verbinders in der ersten Einhängestellung mit schematisch dargestellten Werkstücken in einer Seitenansicht (Fig. 3), in einer zweiten Einhängestellung in einer Seitenansicht (Fig. 4), sowie anhand eines der beiden (gleichen) Beschläge des Verbinders in einer Perspektivansicht (Fig. 5);
Fig. 6 ein drittes Beispiel des Verbinders, entsprechend der ersten Ausführungsform der Erfindung, anhand eines seiner beiden (gleichen) Beschläge in einer Perspektivansicht;
die Fig. 7 bis 9 ein viertes Beispiel des Verbinders in der ersten Einhängestellung in einer Perspektivansicht (Fig. 7) sowie jeweils die beiden Beschläge des Verbinders einzeln in Perspektivansichten (Fig. 8 und 9); und
die Fig. 10 bis 12 ein fünftes Beispiel des Verbinders, entsprechend der zweiten Ausführungsform der Erfindung, einmal in der ersten Einhängestellung mit einem Werkzeug zum Lösen der Sicherungsklammer in einer Perspektivansicht (Fig. 10), einmal während des Lösens bzw. Einhängens in einer Perspektivansicht (Fig. 11) und einmal anhand eines der beiden (gleichen) Beschläge des Verbinders in einer Perspektivansicht (Fig. 12).

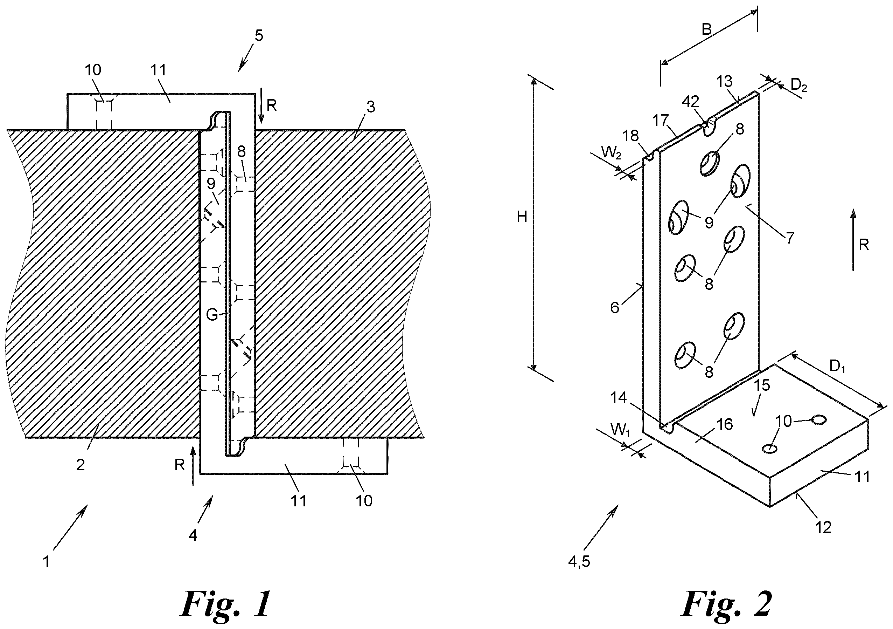

In den Fig. 1 bis 2 ist ein erstes Beispiel eines Verbinders 1 für zwei Werkstücke 2, 3 gezeigt. Die Werkstücke 2, 3 können aus Holz, insbesondere Brettschichtholz, aus Beton, Mauerwerk, Stein, Metall od.dgl. sein, beispielsweise Träger und/oder Vertikalbauteile, z.B. Stützen, Pfosten oder Wände. Der Verbinder 1 umfasst einen ersten Beschlag 4 und einen zweiten Beschlag 5. Die Beschläge 4, 5 sind bevorzugt, jedoch nicht zwingend, gleich aufgebaut (siehe Fig. 2) und werden spiegelbildlich gegengleich ineinander eingehängt, siehe Fig. 1.

Jeder Beschlag 4, 5 hat jeweils eine Montageseite 6, mit der er an einem der Werkstücke 2, 3 montiert wird, und eine gegenüberliegende Verbindungsseite 7, an welcher er mit dem jeweils anderen Beschlag 4, 5 verbunden werden kann. Zur Verbindung werden die Beschläge 4, 5 an ihren Verbindungsseiten 7 in einer parallel zu den Verbindungsseiten 7 verlaufenden (hier: vertikalen) Einhängerichtung R ineinander eingehängt, wie nachstehend ausführlicher beschrieben.

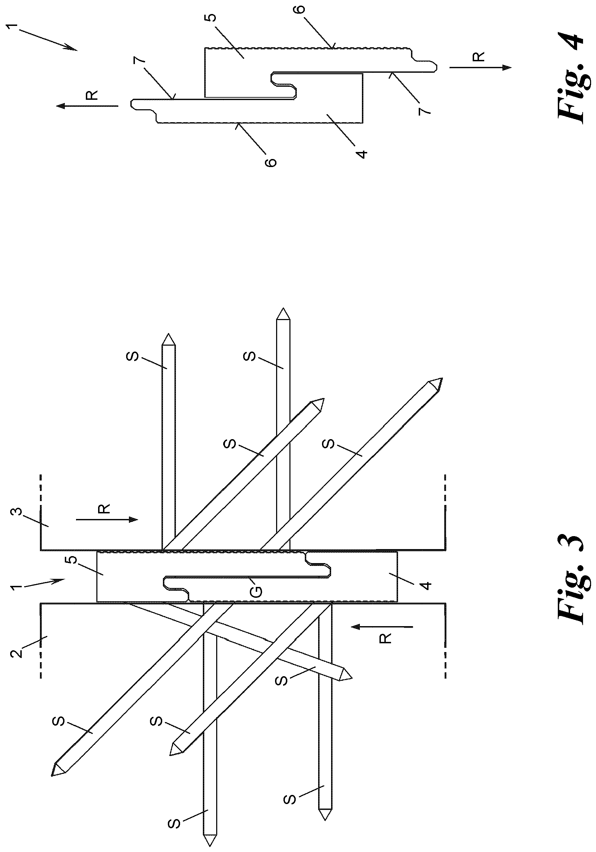

Zur Montage der Beschläge 4, 5 an den Werkstücken 2, 3 ist jeder Beschlag 4, 5 mit einer oder mehreren Bohrungen 8, 9 für den Durchtritt von Schrauben S (Fig. 3) versehen, die in die Werkstücke 2, 3 eingreifen. Die Bohrungen 8, 9 können unter beliebigen Winkeln die Beschläge 4, 5 durchsetzen, je nach Erfordernis. In dem gezeigten Beispiel sind mehrere Bohrungen 8 dargestellt, welche die Montageseite 6 des jeweiligen Beschlags 4, 5 normal durchsetzen, und mehrere Bohrungen 9, welche die Montageseite 6 schräg durchsetzen. Dadurch können unterschiedlichste Zugrichtungen zwischen dem jeweiligen Werkstück 2, 3 und Beschlag 4, 5 in Richtung auf die Montageseite 6 aufgenommen werden, je nach Einbausituation und Winkel zwischen den Werkstücken 2, 3 bzw. Neigung jener Seiten der Werkstücke 2, 3, an denen die Beschläge 4, 5 verankert werden sollen.

Wie insbesondere aus Fig. 2 ersichtlich hat jeder Beschlag 4, 5 an seiner Verbindungsseite 7 einen quer zur Einhängerichtung R über seine gesamte Breite B verlaufenden Absatz 11. Der Absatz 11 ist optional (wenn auch nicht zwingend) außermittig der Höhe H des Beschlags 4, 5 angeordnet, d.h. nahe der einen Stirnseite 12 des Beschlags 4, 5 und fern der gegenüberliegenden Stirnseite 13 des Beschlags 4, 5, beispielsweise auf 1/5, 1/4 oder 1/3 der Höhe H.

Der Absatz 11 hat in Richtung auf die Verbindungsseite 7 gesehen eine Hinterschneidung 14, d.h. entgegen der Einhängerichtung R und in Richtung auf die Stirnseite 15 des Absatzes 11 gesehen eine Nut. Diese Nut bzw. Hinterschneidung 14 belässt auf dem Absatz 11 einen Steg 16. In Richtung auf die Verbindungsseite 7 gesehen sind die Dicke des Stegs 16 mit D₁ und die lichte Weite (Nut- bzw. Spaltbreite) der Hinterschneidung 14 mit W₁ bezeichnet.

Die dem Absatz 11 ferne, der Verbindungsseite 7 benachbarte Stirnseite 13 des Beschlags 4, 5 ist mit einer quer zur Einhängerichtung R über die gesamte Breite B des Beschlags 4, 5 verlaufenden, an die Verbindungsseite 7 unmittelbar angrenzenden Lippe 17 ausgestattet. Die Lippe 17 hat in Richtung auf die Verbindungsseite 7 gesehen eine Dicke D₂. In Richtung auf die Verbindungsseite 7 gesehen "hinter" der Lippe 17 belässt diese somit eine Stufe 18 in der Stirnseite 13. Die Weite der Stufe 18 in Richtung normal zur Verbindungsseite 7 ist mit W₂ bezeichnet.

Mit Hilfe der Stege 16 und Hinterschneidungen 14 der Absätze 11 sowie der Lippen 17 und Stufen 18 der Stirnseiten 13 können die Beschläge 4, 5 nun in verschiedenen Stellungen ineinander eingehängt werden, wie nachfolgend beschrieben.

In der in Fig. 1 gezeigten Einhängestellung des Beispiels der Fig. 1 und 2 greift die Lippe 17 jedes Beschlags 4, 5 in die Hinterschneidung 14 des jeweils anderen Beschlags 5, 4 ein, und damit gleichzeitig auch der Steg 16 jedes Beschlags 4, 5 in die Stufe 18 des jeweils anderen Beschlags 5, 4. Dadurch ergibt sich eine vollflächige Anlage der Stege 16 und Lippen 17 des jeweils einen Beschlags 4, 5 an den Gründen (Böden) der Hinterschneidungen 14 und Stufen 18 des jeweils anderen Beschlags 5, 4, was eine gleichmäßige Lastaufnahme gewährleistet.

Um eine spielfreie Verbindung der Beschläge 4, 5 in Richtung normal auf die Verbindungsseiten 7 zu erreichen, ist die Dicke D₂ der Lippen 17 an die lichte Weite W₁ der Hinterschneidungen 14 möglichst gut angepasst, d.h. gleich oder nur soweit geringfügig kleiner, dass ein gleitendes Einhängen der Lippen 17 in die Hinterschneidungen 14 in Einhängerichtung R möglich ist.

Alternativ kann die Dicke D₂ der Lippen 17 auch signifikant kleiner als die lichte Weite W₁ der Hinterschneidungen 14 sein, um ein merkliches Spiel im Spalt G zwischen den Beschlägen 4 und 5 in Richtung normal auf deren Verbindungsseiten 7 zu errichten.

In dem in den Fig. 1 und 2 gezeigten Beispiel ist die Dicke D₁ der Stege 16 überaus groß, so dass jeder Steg 16 gleichsam zu einer winkelförmig von der Verbindungsseite 7 des jeweiligen Beschlags 4, 5 auskragenden Tragplatte verlängert ist. Auf dieser durch den Steg 16 des Absatzes 11 gebildeten Tragplatte kann somit beispielsweise die Unterseite des jeweils anderen Werkstücks 2, 3 abgestützt werden, wie in Fig. 1 gezeigt. Auf diese Weise kann der mit seiner Montageseite 6 am Werkstück 2 montierte Beschlag 4 nicht nur über den gegnerischen Beschlag 5, sondern zusätzlich auch unterstützend über seinen (als Tragplatte ausgeführten) Steg 16 am anderen Werkstück 3 angreifen, und vice versa der andere Beschlag 5 am Werkstück 2. Optional kann dabei der Steg 16 mit einer oder mehreren Bohrungen 10 versehen sein, um ihn mit dem anderen Werkstück 3 zu verschrauben. Die Bohrungen 10 können sowohl normal als auch schräg zur Stirnseite 15 des Absatzes 11 diesen durchsetzen.

In den Fig. 3 - 5 ist ein zweites Beispiel des Verbinders 1 gezeigt, wobei hier die Dicke D₁ der Stege 16 kleiner oder gleich der lichten Weite W₁ der Hinterschneidungen 14 der Beschläge 4, 5 ist. Damit können die Beschläge 4, 5 einerseits - so wie in Fig. 1 - in einer ersten Einhängestellung gemäß Fig. 3 ineinander eingehängt werden, andererseits aber auch wahlweise in der in Fig. 4 gezeigten zweiten Einhängestellung ineinander eingehängt werden. In dieser Stellung greift der Steg 16 jedes Beschlags 4, 5 in die Hinterschneidung 14 des jeweils anderen Beschlags 5, 4 ein.

Wenn die Dicke D₁ der Stege 16 kleiner als die lichte Weite W₁ der Hinterschneidungen 14 ist, besteht ein Spiel zwischen den beiden Beschlägen 4, 5 in Richtung normal auf die Verbindungsseiten 7, sodass die Beschläge 4, 5 auch geringfügig gegeneinander verkippen können, und zwar um eine Achse, die parallel zu den Stegen 16 verläuft. Die ineinander eingehängten Absätze 11 der beiden Beschläge 4, 5 wirken dann als eine Art Gelenk.

Um in der ersten Einhängestellung (Fig. 3) eine möglichst vollflächige Anlage der ineinander eingehängten Beschläge 4, 4 an den Werkstücken 2, 3 zu ermöglichen, kann optional die Dicke D₁ der Stege 16 möglichst gut an die Weite W₂ der Stufen 18 angepasst sein.

Es versteht sich, dass die Lastaufnahmefähigkeit des Verbinders 1 in Einhängrichtung R in der Doppel-Einhängestellung der Fig. 1 und 3 höher ist als in der Gelenk-Einhängestellung von Fig. 4.

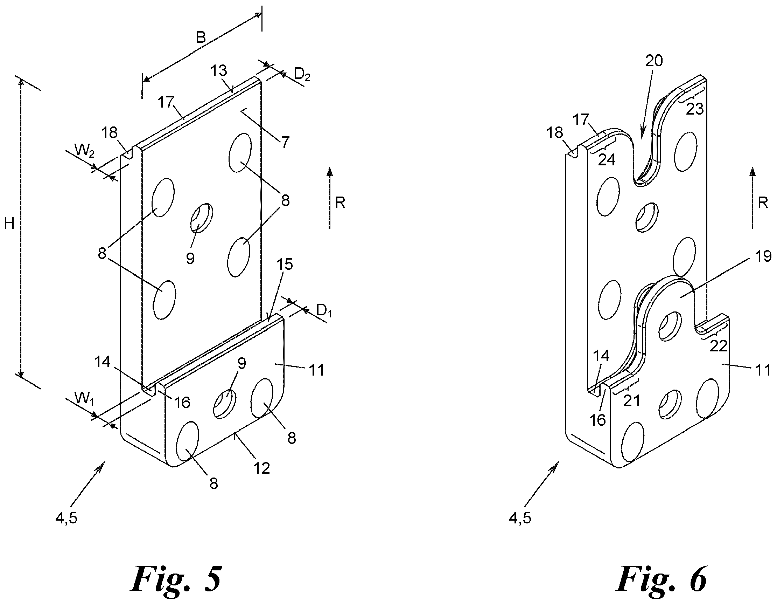

Bei den Beispielen der Verbinder 1 der Fig. 1 bis 5 verlaufen die Absätze 11 und ihre Stege 14 sowie die Stirnseiten 13 und ihre Lippen 17, bevorzugt auch die Hinterschneidungen 14 und Stufen 18, jeweils gerade über die gesamte Breite B des Beschlags 4, 5, und zwar insbesondere geradlinig horizontal in der gezeigten vertikalen Einbaustellung. Fig. 6 zeigt demgegenüber ein alternatives Beispiel der (untereinander bevorzugt gleichen) Beschläge 4, 5 des Verbinders 1 mit einem nichtgeradlinigen Verlauf dieser Anlageflächen.

Bei dem Beispiel von Fig. 6 haben der Absatz 11 und sein Steg 16, optional auch seine Hinterschneidung 14, im Verlauf über die Breite B des Beschlags 4, 5 eine Ausbuchtung 19, und die absatzferne Stirnseite 13 und ihre Lippe 17, optional auch ihre Stufe 18, in gleichartiger Weise im Verlauf über die Breite B des Beschlags 4, 5 eine dazu komplementäre Einbuchtung 20. Die Ausbuchtung 19 und die Einbuchtung 20 bilden eine Art Schwalbenschwanzverbindung beim ineinander Einhängen der Beschläge 4, 5 und zentrieren bzw. richten diese in Verlaufsrichtung der Breite B gesehen aufeinander aus.

Wie aus Fig. 6 ersichtlich haben die Absätze 11, Stege 16, Hinterschneidungen 14, Lippen 17 und Stufen 18 in ihren den Aus- und Einbuchtungen 19, 20 benachbarten Abschnitten 21 - 24 jeweils einen geraden (hier: horizontalen) Verlauf, um große Anlageflächen zwischen den Beschlägen 4, 5 in Einhängerichtung R zu schaffen.

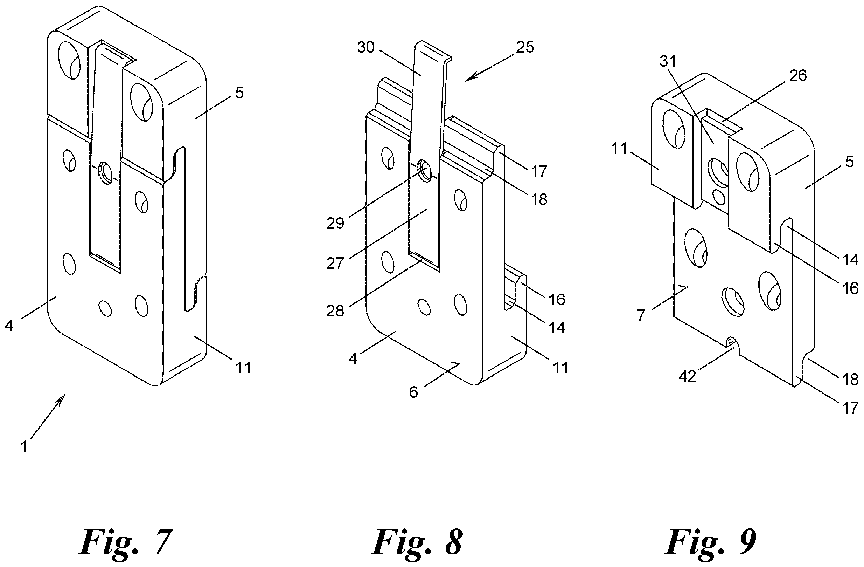

In den Fig. 7 bis 9 ist ein weiteres Beispiel des Verbinders 1 gezeigt, bei welcher zumindest einer der Beschläge 4, 5, hier der Beschlag 4, mit einem Rasthaken 25 ausgestattet ist. Der Rasthaken 25 des Beschlags 4 kann federnd in eine entsprechende Aussparung 26 des anderen Beschlags 5, hier auf dessen Absatz 11 angeordnet, einschnappen.

In dem gezeigten Beispiel ist der Rasthaken 25 an seinem einen Ende 27 in einer Nut 28 der Montageseite 6 des Beschlags 4 verankert. Beispielsweise wird das Ende 27 in die Nut 28 flächenbündig lose eingelegt und von einer der Schrauben S, die eine mit den Bohrungen 8 fluchtende Bohrung 29 des Rasthakens 25 durchsetzen, gehalten. Alternativ könnte der Rasthaken 25 mit dem Beschlag 4 verklebt, verschraubt, verschweißt oder sogar einstückig ausgeführt sein.

Das vom Beschlag 4 auskragende Hakenende 30 des Rasthakens 25 kann auf seinem Weg zur Aussparung 26 des anderen Beschlags 5 in einer Nut 31 des Beschlags 5 geführt sein.

Auch in dem Beispiel der Fig. 7 bis 9 können die Beschläge 4, 5 gleich ausgebildet sein, d.h. auch der andere Beschlag 5 kann eine Nut 28 für die Verankerung eines zweiten Rasthakens 25 haben, der in eine Nut 31 und Aussparung 26 des einen Beschlags 4 eingreift.

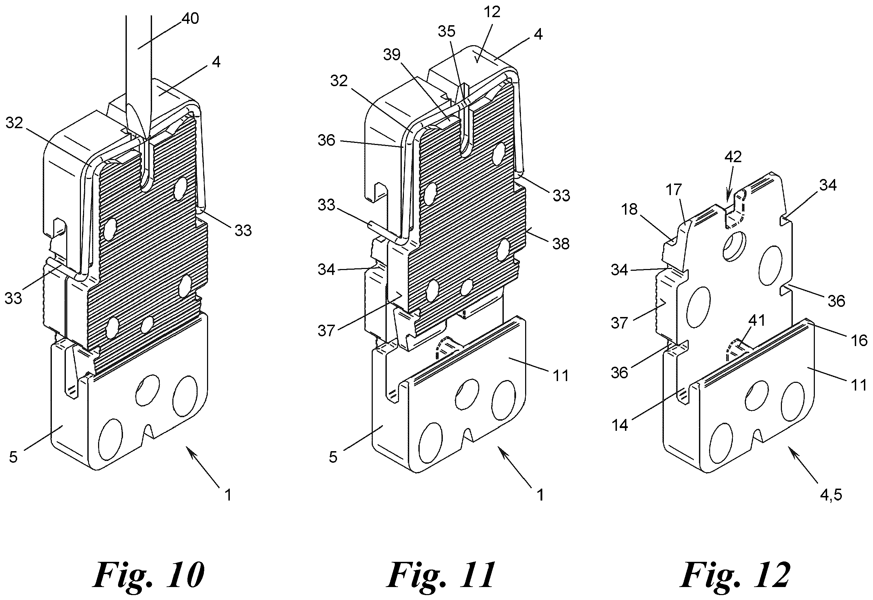

In den Fig. 10 bis 12 ist ein weiteres Beispiel des Verbinders 1 gezeigt. Der Verbinder 1 umfasst hier eine im Wesentlichen U-förmige federnde Klammer 32 mit Hakenenden 33. Die Klammer 32 übergreift den einen Beschlag 4 und schnappt in der Fig. 10 gezeigten Einhängestellung der Beschläge mit ihren Hakenenden 33 in seitlichen Aussparungen 34 des anderen Beschlags 5 federnd ein. Der Mittelabschnitt 35 der Klammer 32 zwischen den Hankenenden 33 ist dabei im Wesentlichen bündig in einer U-förmigen Ausnehmung 36 des einen Beschlags 4 geführt. Die Ausnehmung 36 verläuft über die absatznahe Stirnseite 12 und jeweils einen angrenzenden Teil der Lateralseiten 37, 38 des einen Beschlags 4, beispielsweise mittig oder (wie hier) am Rand des Beschlags 4.

Die U-förmige Ausnehmung 36 hat eine zentrale Vertiefung 39, und zwar im mittleren Bereich ihres über die absatznahe Stirnseite 12 verlaufenden Abschnitts. Wenn der zentrale Bereich des Mittelabschnitts 35 der Klammer 32 mittels eines Werkzeugs 40 in die Vertiefung 39 hineingedrückt wird, verbiegt sich die Klammer 32 dort konkav einwärts und ihre Hakenenden 33 werden auseinandergespreizt, so dass sie aus den Aussparungen 34 ausrasten. Dadurch können die Beschläge 4, 5 entgegen der Einhängerichtung R wieder voneinander gelöst werden.

Die Beschläge 4, 5 können auch in dem Beispiel der Fig. 10 bis 12 optional (wenn auch nicht zwingend) gleich gestaltet sein, d.h. auch der andere Beschlag 5 kann mit einer U-förmigen Ausnehmung 36 zur Aufnahme einer zweiten U-förmigen federnden Klammer 32 ausgestattet sein.

In jedem der obigen Beispiele kann, wie in den Fig. 11 und 12 gezeigt, in der Hinterschneidung 14 zumindest eines Beschlags 4, 5 optional ein Ausrichtstift 41 angeordnet sein, welcher beim Einhängen in eine Ausrichtkerbe 42 der Lippe 17 eingreift, um die Beschläge 4, 5 quer zur Einhängrichtung R aufeinander auszurichten. Eine solche Stift/Kerbe- bzw. Nut/Feder-Ausrichtung kann auch durch andere Ausrichtmittel zwischen den Beschlägen 4, 5 erreicht werden, z.B. eine komplementäre Gestaltung ihrer Verbindungsseiten 7, um eine unbeabsichtigte Verschiebung in der Ebene der Verbindungsseiten 7 quer zur Einhängerichtung R zu verhindern.

## Patentansprüche

1. Verbinder für zwei Werkstücke, mit zwei Beschlägen (4, 5), die jeweils eine Montageseite (6) für ein Werkstück (2, 3) und eine gegenüberliegende Verbindungsseite (7) haben, an welcher sie in einer parallel zur Verbindungsseite (7) verlaufenden Einhängerichtung (R) ineinander einhängbar sind,
wobei jeder Beschlag (4, 5) an seiner Verbindungsseite (7) einen quer zur Einhängerichtung (R) über seine gesamte Breite (B) verlaufenden Absatz (11) mit einer Hinterschneidung (14) aufweist, welche einen Steg (16) auf dem Absatz (11) belässt, und seine dem Absatz (11) ferne, der Verbindungsseite (7) benachbarte Stirnseite (13) eine quer zur Einhängerichtung (R) über seine gesamte Breite (B) verlaufende, an die Verbindungsseite (7) angrenzende Lippe (17) hat, und
wobei in einer ersten ineinander eingehängten Stellung der Beschläge (4, 5) die Lippe (17) jedes Beschlags (4, 5) in die Hinterschneidung (14) des jeweils anderen Beschlags (5, 4) eingreift,
**dadurch gekennzeichnet,**
**dass** der Absatz (11) und sein Steg (16) im Verlauf über die Breite (B) des Beschlags (4, 5) eine Ausbuchtung (19) und die genannte Stirnseite (13) und ihre Lippe (17) im Verlauf über die Breite (B) des Beschlags (4, 5) eine dazu komplementäre Einbuchtung (20) haben; und/oder
**dass** in der Hinterschneidung (14) ein Ausrichtstift (41) angeordnet ist, welcher beim Einhängen in eine Ausrichtkerbe (42) der Lippe (17) eingreift, um die Beschläge (4, 5) quer zur Einhängerichtung (R) aufeinander auszurichten.

2. Verbinder nach Anspruch 1, **dadurch gekennzeichnet, dass** die Dicke (D₂) der Lippe (17) kleiner ist als die lichte Weite (W₁) der Hinterschneidung (14).

3. Verbinder nach Anspruch 1 oder 2, **dadurch gekennzeichnet, dass** die Dicke (D₁) des Stegs (16) kleiner ist als die lichte Weite (W₁) der Hinterschneidung (14).

4. Verbinder nach einem der Ansprüche 1 bis 3, **dadurch gekennzeichnet, dass** der eine Beschlag (4, 5) mit einem Rasthaken (25) ausgestattet ist, welcher federnd in eine Aussparung (26) des anderen Beschlags (5, 4) einschnappen kann.

5. Verbinder nach Anspruch 4, **dadurch gekennzeichnet, dass** der Rasthaken (25) an seinem einen Ende (27) in einer Nut (28) der Montageseite (6) verankert ist und mit seinem anderen Ende (30) über die Lippe (17) vorsteht und in die Aussparung (26) des anderen Beschlags (5, 4) einschnappen kann, welche auf dessen Absatz (11) ausgebildet ist.

6. Verbinder nach einem der Ansprüche 1 bis 5, ferner **gekennzeichnet durch** eine im wesentlichen U-förmige federnde Klammer (32) mit Hakenenden (33), welche den einen Beschlag (4, 5) übergreift und mit ihren Hakenenden (33) in seitliche Aussparungen (34) des anderen Beschlags (5, 4) einschnappen kann.

7. Verbinder nach Anspruch 6, **dadurch gekennzeichnet, dass** der Mittelabschnitt (35) der Klammer (32) zwischen den Hakenenden (33) im wesentlichen bündig in einer U-förmigen Ausnehmung (36) des einen Beschlags (4, 5) geführt ist.

8. Verbinder nach Anspruch 7, **dadurch gekennzeichnet, dass** die U-förmige Ausnehmung (36) eine zentrale Vertiefung (39) hat, in welche der Mittelabschnitt (35) der Klammer (32) hineindrückbar ist, um ihre Hakenenden (33) auseinanderzuspreizen.

9. Verbinder nach einem der Ansprüche 1 bis 8, **dadurch gekennzeichnet, dass** jeder Beschlag (4, 5) sowohl von Bohrungen (8) normal zur Montageseite (6) als auch von Bohrungen (9) schräg zur Montageseite (6) durchsetzt ist.

10. Verbinder nach einem der Ansprüche 1 bis 9, **dadurch gekennzeichnet, dass** der Steg (16) zu einer winkelförmig von der Verbindungsseite (7) auskragenden Tragplatte verlängert ist.

11. Verbinder nach Anspruch 10, **dadurch gekennzeichnet, dass** die Tragplatte zumindest eine sie normal oder schräg durchsetzende Bohrung (10) aufweist.

## Claims

1. Connector for two workpieces, comprising two fittings (4, 5) which each have a mounting face (6) for a workpiece (2, 3) and an opposite connecting face (7), on which they can be hooked into one another in a hooking direction (R) extending in parallel with the connecting face (7),
wherein each fitting (4, 5) comprises, on its connecting face (7), a shoulder (11) which extends transversely to the hooking direction (R) over its entire width (B) and comprises an undercut (14), which leaves a ridge (16) on the shoulder (11), and its face (13) remote from the shoulder (11) and adjacent to the connecting face (7) has a lip (17) adjacent to the connecting face (7) and extending over its entire width (B) transversely to the hooking direction (R), and
wherein the lip (17) of each fitting (4, 5) engages in the undercut (14) in the respective other fitting (5, 4) in a first position of the fittings (4, 5) in which they are hooked into one another,
**characterised in**
**that** the shoulder (11) and its ridge (16) have a protrusion (19) in the extension over the width (B) of the fitting (4, 5) and said end face (13) and its lip (17) have an indentation (20) that is complementary thereto in the extension over the width (B) of the fitting (4, 5); and/or
**that** an aligning pin (41), which engages in an aligning notch (42) in the lip (17) during hooking in order to align the fittings (4, 5) with one another transversely to the hooking direction (R), is arranged in the undercut (14).

2. Connector according to claim 1, **characterised in that** the thickness (D₂) of the lip (17) is less than the clear width (W₁) of the undercut (14).

3. Connector according to claim 1 or 2, **characterised in that** the thickness (D₁) of the ridge (16) is less than the clear width (W₁) of the undercut (14).

4. Connector according to any one of claims 1 to 3, **characterised in that** one fitting (4, 5) is equipped with a latching hook (25) which can snap into a recess (26) in the other fitting (5, 4) in a sprung manner.

5. Connector according to claim 4, **characterised in that** the latching hook (25) is anchored at one end (27) in a groove (28) in the mounting face (6) and projects over the lip (17) at the other end (30) and can snap into the recess (26) in the other fitting (5, 4), which recess (26) is formed on the shoulder (11) of the latter.

6. Connector according to any one of claims 1 to 5, **characterised by** a substantially U-shaped sprung bracket (32) having hooked ends (33), which engages over one fitting (4, 5) and can snap into lateral recesses (34) in the other fitting (5, 4) by its hooked ends (33).

7. Connector according to claim 6, **characterised in that** the central portion (35) of the bracket (32) between the hooked ends (33) extends to be substantially flush in a U-shaped recess (36) in one fitting (4, 5).

8. Connector according to claim 7, **characterised in that** the U-shaped recess (36) has a central depression (39), into which the central portion (35) of the bracket (32) can be pressed in order to spread apart its hooked ends (33).

9. Connector according to any one of claims 1 to 8, **characterised in that** each fitting (4, 5) is penetrated both by holes (8) normal to the mounting face (6) and by holes (9) oblique to the mounting face (6).

10. Connector according to any one of claims 1 to 9, **characterised in that** the ridge (16) is extended to form a bearing plate projecting out from the connecting face (7) at an angle.

11. Connector according to claim 10, **characterised in that** the bearing plate comprises at least one hole (10) that penetrates it in a normal or oblique manner.

## Revendications

1. Connecteur pour deux pièces, pourvu de deux ferrures (4, 5) qui ont respectivement un côté de montage (6) pour une pièce (2, 3) et un côté de liaison (7) situé à l'opposé, sur lequel elles peuvent être accrochées l'une dans l'autre dans une direction d'accrochage (R) s'étendant parallèlement par rapport au côté de liaison (7),
dans lequel chaque ferrure (4, 5) présente, au niveau de son côté de liaison (7), un épaulement (11) s'étendant perpendiculairement par rapport à la direction d'accrochage (R) sur toute sa largeur avec une contre-dépouille (14), laquelle laisse une nervure (16) sur l'épaulement (11), et son côté avant (13) éloigné de l'épaulement (11) et au voisinage du côté de liaison (7) a une lèvre (17) s'étendant perpendiculairement par rapport à la direction d'accrochage (R) sur toute sa largeur (B) et étant adjacente au côté de liaison (7), et
dans lequel, dans une première position d'accrochage l'une dans l'autre des ferrures (4, 5), la lèvre (17) de chaque ferrure (4, 5) se met en prise dans la contre-dépouille (14) de l'autre ferrure (5, 4) respective,
**caractérisé en ce**
**que** l'épaulement (11) et sa nervure (16) ont, dans leur parcours sur la largeur (B) de la ferrure (4, 5), un renflement (19) et ledit coté avant (13) et sa lèvre (17) ont, dans leur parcours sur la largeur (B) de la ferrure (4, 5), un creux (20) lui étant complémentaire ; et/ou
**que** dans la contre-dépouille (14) une goupille d'alignement (41) est disposée, laquelle se met en prise lors de l'accrochage dans une encoche d'alignement (42) de la lèvre (17), afin d'aligner les ferrures (4, 5) l'une par rapport à l'autre perpendiculairement par rapport à la direction d'accrochage (R).

2. Connecteur selon la revendication 1, **caractérisé en ce que** l'épaisseur (D₂) de la lèvre (17) est inférieure au diamètre intérieur (W₁) de la contre-dépouille (14).

3. Connecteur selon la revendication 1 ou 2, **caractérisé en ce que** l'épaisseur (D₁) de la nervure (16) est inférieure au diamètre intérieur (W₁) de la contre-dépouille (14).

4. Connecteur selon l'une des revendications 1 à 3, **caractérisé en ce qu'**une des ferrures (4, 5) est équipée d'un crochet de verrouillage (25), lequel peut s'enclencher de manière élastique dans un évidement (26) de l'autre ferrure (5, 4).

5. Connecteur selon la revendication 4, **caractérisé en ce que** le crochet de verrouillage (25) est ancré au niveau d'une de ses extrémités (27) dans une rainure (28) du côté de montage (6) et avec son autre extrémité (30) dépasse au-dessus de la lèvre (17) et peut s'enclencher dans l'évidement (26) de l'autre ferrure (5, 4), lequelle est formé sur son épaulement (11).

6. Connecteur selon l'une des revendications 1 à 5, **caractérisé en outre par** une pince (32) élastique essentiellement en forme de U avec des extrémités en crochets (33), laquelle empiète sur une des ferrures (4, 5) et peut s'enclencher avec ses extrémités de crochets (33) dans des évidements latéraux (34) de l'autre ferrure (5, 4).

7. Connecteur selon la revendication 6, **caractérisé en ce que** la partie médiane (35) de la pince (32) entre les extrémités de crochets (33) est guidée essentiellement affleurante dans un évidement (36) en forme de U d'une des ferrures (4, 5).

8. Connecteur selon la revendication 7, **caractérisé en ce que** l'évidement (36) en forme de U possède un creux central (39) dans lequel la partie médiane (35) de la pince (32) peut être pressée afin d'écarter ses extrémités de crochets (33) l'une de l'autre.

9. Connecteur selon l'une des revendications 1 à 8, **caractérisé en ce que** chaque ferrure (4, 5) est traversée à la fois par des alésages (8) normaux par rapport au côté de montage (6) et par des alésages (9) en biais par rapport au côté de montage (6).

10. Connecteur selon l'une des revendications 1 à 9, **caractérisé en ce que** la nervure (16) est prolongée en une plaque support s'élargissant en angle à partir du côté de liaison (7).

11. Connecteur selon la revendication 10, **caractérisé en ce que** la plaque support présente au moins un alésage (10) la traversant de manière normale ou en biais.
